# EUROPEAN PATENT APPLICATION

(11) **EP 4 818 919 A1**
(43) Date of publication of application: **07.10.2026**
(21) Application number: 26170608.9
(22) Date of filing: 02.04.2026
(51) Int. Cl.: G06F 16/21, G06F 11/30, G06F 11/34

(54) **SYSTEMS AND METHODS FOR MONITORING DATABASE QUERIES IN A DISTRIBUTED COMPUTING ENVIRONMENT**

(30) Priority: 04.04.2025 US 202563783325 P; 31.03.2026 US 202619634650
(71) Applicant: Dynatrace LLC, Boston, Massachusetts 02210 (US)
(72) Inventor: GLUGLA, Dariusz, Linz (AT); RACINIEWSKI, Krzysztof, Linz (AT)
(74) Representative: Steffens, Adrian

(57) **Abstract**

Systems and methods for monitoring database queries in a distributed computing environment are provided. An agent instrumented in an application executing a computer transaction receives a database statement and modifies it by adding metadata. The agent sends the modified database statement to a database system and sends monitoring data, including the metadata, to a remotely located monitor server. In response to execution of the database statement, the database system generates diagnostic data. The monitor server retrieves the diagnostic data from the database system and correlates the retrieved diagnostic data with the monitoring data using the metadata. This allows for automated, end-to-end performance correlation extending from the application layer down to the database layer without interfering with database statement behavior. (Fig. 1)

## Description

### Field

The present disclosure relates to the monitoring of database queries. In particular, the disclosure relates to computer-implemented methods and systems for monitoring database queries in a distributed computing environment.

### Background

Application performance monitoring is traditionally independent of database monitoring. While application performance monitoring is typically provided by application agents (e.g., Dynatrace OneAgent) configured to monitor code execution by hooking into application methods, database monitoring is generally provided by separate database monitoring solutions that focus on the performance and efficiency of the database server.

Because systems for application performance monitoring and database monitoring operate independently, extending the performance analysis of a database statement from the application layer down to the database server layer can be difficult. For instance, a user may need to manually search for a database statement of interest within the database system. Since relational database management systems are complex and a user's access to the database is typically limited, this manual correlation can be cumbersome. Furthermore, in distributed computing environments, multiple applications or services may execute similar database statements on the same database, which complicates the isolation and analysis of specific transactions.

While some database servers utilize internal query identifiers to track query executions over time, these identifiers are typically restricted to internal database use and are not populated back to the client application. Consequently, retrieving server-side database diagnostic metrics for automated correlation with client-side application monitoring data (such as request timing, trace context, and service identification) remains a technical challenge in distributed computing environments.

This section provides background information related to the present disclosure which is not necessarily prior art.

### Summary

The present disclosure is directed to systems and methods for monitoring database queries in a distributed computing environment. A particular objective of the present disclosure is to extend application monitoring up to and including the database level, allowing for quick anomaly resolution even for complex computing situations involving multiple instances or services and at least one database.

In one aspect, a computer-implemented method for monitoring database queries in a distributed computing environment is provided. The method includes receiving, by an agent, a database statement, where the agent is instrumented in an application and the application is executing a computer transaction within the computing environment. The method further includes modifying, by the agent, the database statement by adding metadata to the database statement, and sending, by the agent, the modified database statement to a database system. The method also includes sending, by the agent, monitoring data for the application to a monitor server, where the monitoring data includes the metadata, and the monitor server is located remotely across a network from the application. The method additionally includes retrieving, by the monitor server, diagnostic data from the database system, where the diagnostic data is generated in response to execution of the database statement, and correlating, by the monitor server, the diagnostic data with the monitoring data using the metadata.

In another aspect, a computer-implemented system for monitoring database queries is provided. The system comprises a monitor server and an application agent instrumented in an application executing a computer transaction. The system is configured to perform operations corresponding to the method described above, bridging the gap between application monitoring and database metrics.

The present disclosure aims at the automated combination of both client- and server-side monitoring approaches. In some embodiments, the application agent exposes a configuration property allowing a user to enable query manipulation in a monitored environment. Once enabled, the agent modifies the database statement requested to be executed on the database by adding its own metadata (e.g., a tracelD). Because the modifications are structured properly, they do not interfere with database statement behavior or execution performance. Server-side built-in performance monitoring solutions can then be used to collect diagnostic data and extract the metadata passed by the agent. By correlating the monitoring data collected from the application layer with the diagnostic data extracted at the database layer using the metadata, users can achieve automated end-to-end performance monitoring.

This intelligent correlation makes it transparent for an application owner to track query execution end-to-end. It allows systems to distinguish diagnostic data even when multiple services execute similar database statements on the same database, and makes it possible to trace an execution and diagnose the database server's state at that exact moment. This provides deep insights regarding query performance or the exact query plan used during specific executions, thereby improving diagnosability in complex environments, minimizing context switching, and improving communication between application owners and database administrators.

According to a preferred embodiment, the database statement is a query and the metadata is defined as an identifier for the query to enable correlation of monitoring and diagnostic data, such as an identifier assigned to the computer transaction, an identifier for a particular operation executed as part of the computer transaction, an identifier that links multiple operations executed as part of the computer transaction, an identifier for a particular service, an identifier for a particular application, an identifier assigned to a system user, or a Universal Unique Identifier.

While metadata can be added in several ways, it is robust to add the metadata as a comment within the database statement. Comments placed within the database statement are not removed by the database and do not alter execution semantics.

In another very preferred embodiment, modifying the database statement comprises defining a prepared statement having at least one placeholder, and binding the metadata to the at least one placeholder to generate the modified database statement. Using prepared statements improves query execution performance, as database statements can be reused irrespective of the metadata added to database statements.

According to another embodiment, modifying the database statement further comprises requesting the database system to include the metadata in query results, e.g., as a column in the query results.

Depending on how metadata is added to the query statement, it may be beneficial to intercept the query results returned by the database system, remove the metadata from the query results, and forward the query results without the metadata to the application, such that normal application functionality is not affected.

For even better coverage of monitoring data, it may be beneficial to intercept a database response to the database statement and, in response to receiving the database response, send monitoring data for the application to the monitor server, where the database response is generated in response to execution of the database statement and the monitoring data includes the database response.

In another very preferred embodiment, the database system generates diagnostic data in response to the execution of the database statement, and stores the diagnostic data in a diagnostic database associated with the database system. The diagnostic data may include one or more of elapsed time to execute database statement, CPU time consumed by the database statement, number of logical reads resulting from execution of the database statement, number of physical reads from disk resulting from execution of the database statement, and number of rows processed by execution of the database statement.

More monitoring data is generated by intercepting, by a database agent, the modified query, where the database agent resides on a server hosting the database system; intercepting, by the database agent, a database response to the query; and sending additional monitoring data for the execution of the modified query to the monitor server, where the additional monitoring data includes the query, the metadata and at least a portion of the database response.

Sometimes even deeper insights into the execution of queries can be derived by requesting, by the agent, the database system to generate a native query identifier for the database statement; receiving, by the agent, the native query identifier from the database system; and including, by the agent, the native query identifier in the monitoring data sent to the monitor server.

Although in many cases it is possible to continuously or periodically poll diagnostic data, it may be beneficial to retrieve the diagnostic data from the diagnostic database by formulating a diagnostic query that includes the metadata and at least one wildcard character to pattern-match the metadata within a larger data string stored in the diagnostic database.

In the computer-implemented system, the application agent may be configured to intercept the query results sent by the database system, remove the metadata from the query results, and forward the query results without the metadata to the application.

The application agent may be configured to intercept a database response to the modified query and, in response to receiving the database response, send the monitoring data for the application to the monitor server, where the database response is generated in response to the modified query and the monitoring data includes the database response.

The computer-implemented system may further comprise a database service of the database system, where the database service, in response to execution of the modified query by the database system, generates the diagnostic data and stores the diagnostic data in a diagnostic database associated with the database system.

The computer-implemented system may further comprise a database agent residing on a server hosting the database system, wherein the database agent is configured to intercept the modified query, intercept a database response to the modified query, and send additional monitoring data for the execution of the modified query to the monitor server, where the additional monitoring data includes the query, the metadata and at least a portion of the database response.

Further areas of applicability will become apparent from the description provided herein. The description and specific examples in this summary are intended for purposes of illustration only and are not intended to limit the scope of the present disclosure.

### Drawings

The drawings described herein are for illustrative purposes only of selected embodiments and not all possible implementations, and are not intended to limit the scope of the present disclosure.
- FIG. 1: shows a schematic of a first embodiment for monitoring the performance of database queries,
- FIG. 2: shows a schematic of a second embodiment for monitoring the performance of database queries, and
- FIG. 3: shows a schematic of a third embodiment for monitoring the performance of database queries.

Corresponding reference numerals indicate corresponding parts throughout the several views of the drawings.

### Detailed description

Example embodiments will now be described more fully with reference to the accompanying drawings.

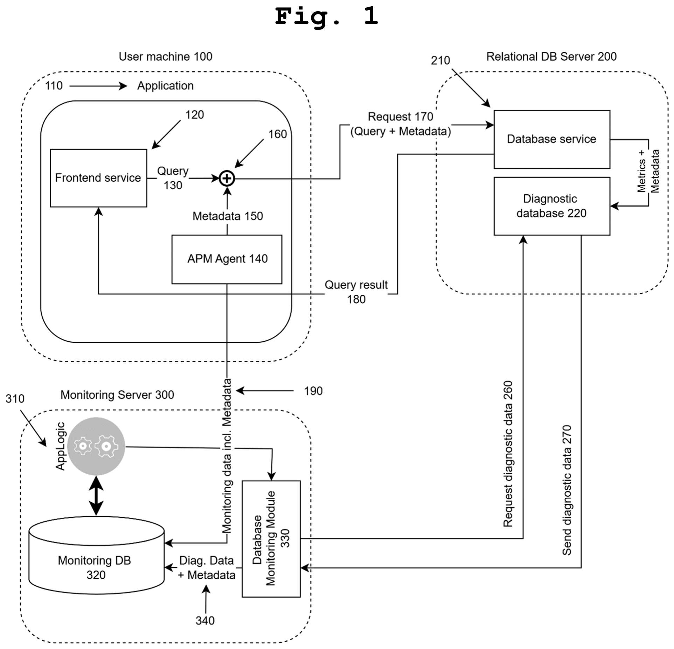

FIG. 1 shows a schema for a first application example in order to explain database monitoring on a relational database. In a first step, the user enters a query statement, short query, 130 in a frontend service 120 of an application 110:

### SELECT SYSDATE FROM DUAL;

The application 110 runs on a user's machine 100. In order to keep the example simple, it is assumed that the query 130 asks a database service 210 running on an Oracle SQL Relational DB server 200 to return the system date to the application 110. The disclosure is, however, not limited to simple queries and works for queries of all complexities.

In a conventional setting without provisions for the monitoring the execution of individual database queries, a request including the query statement 130 is sent directly from the frontend service 120 on the user's machine 100 to the database service 210 on the database server 200. However, according to the present disclosure, metadata 150 including at least one identifier (ID) is added to the query 130 and a request 170 comprising the query and the metadata is sent to the database. Either the request carrying the query 130 is intercepted by an application performance monitoring agent, short APM agent, 140 and the APM agent adds metadata to the query (also called enriches the query with metadata), see block 160, or the APM agent 140 adds metadata 150 to the query 130 and forms the request 170. In either case, at least one, preferably multiple, of the following identifiers are added to the query 130: a spanlD, a tracelD, a transactionlD, a servicelD, a customerlD and a randomly generated UUID. Since all of these identifiers are well known in application performance monitoring, they will be discussed briefly only:
**spanID:** A unique identifier for a specific operation within a trace.
**traceID:** A unique identifier that links multiple operations across different services to a single trace.
**transactionID:** A unique identifier assigned to a specific transaction to track and reference it throughout its lifecycle.
**serviceID:** A unique identifier for the specific service or application instance. As the initial request was sent by the frontend service 120, the servicelD added is the servicelD of the frontend service 120.
**customerID:** A unique identifier assigned to a customer or user.
**UUID:** A universally unique identifier generated randomly to ensure uniqueness.

The spanlD allows to differentiate operations, e.g., HTTP calls, performed by the same service or application instance. The tracelD is used to link together different operations/spans from different services into a single trace. The servicelD is used to identify the specific service or application instance on which the operation takes place. The transactionlD is used to link together different traces. The customerlD is an ID for a user or a customer; and the UUID is a random universal identifier in order to differentiate traces by time, network address etc.

According to the present example, metadata 150 is added as a single-line or a multi-line comment to the query statement 130. Assuming that the metadata 150 comprises the spanlD, the servicelD and the tracelD and that the comment including the metadata precedes the query 130, the query with metadata looks like:
Query with metadata added as a single-line comment: --spanlD=123, servicelD=456, tracelD=789 SELECT SYSDATE FROM DUAL; Query with metadata added as a multi-line comment: /* spanlD=123 servicelD=456 tracelD=789 */ SELECT SYSDATE FROM DUAL; Note that the above identifiers have exemplary values only.

It is noted that some databases remove comments in the query statement if the comment in its entirety is located either before or after the query. In such a case, metadata can be added to the query by placing it within the query, e.g.:
Query with metadata added as comment within the query:
SELECT SYSDATE /*spanlD=123,servicelD=456,tracelD=789*/ FROM DUAL;
After adding metadata 150 to the query 130, the request 170 carrying the query and the added metadata is sent to the database service 210, e.g., in our case at backend.example.com, running on the database server 200.

Depending on the design of the API, the query statement including metadata can be included in the HTTP request 170 in several ways, for example:

### Query Parameters

The query statement can be included as part of the URL query parameters:
GET /api/query?statement=--spanlD=123,%20servicelD=456,%20tracelD=789%0ASE-LECT%20SYSDATE%20FROM%20DUAL HTTP/1.1
Host: backend.example.com

### Request Body

For more complex queries, the query statement can be included in the body of the HTTP request, e.g. using the POST method:

```
 POST /api/query HTTP/1.1
 Host: backend.example.com
 Content-Type: application/json
 {
       --spanlD=123, servicelD=456, tracelD=789\n
       SELECT SYSDATE FROM DUAL;
       }
```

### Custom Headers

In some cases, the query statement might be included in custom HTTP headers:

```
 GET /api/query HTTP/1.1
 Host: backend.example.com
 X-Query-Statement: --spanlD=123, servicelD=456, tracelD=789\n
 SELECT SYSDATE FROM DUAL;
```

In addition, the APM agent 140 generates monitoring data 190 for the request 170 including the query and the metadata and sends it to the monitoring server 300. Monitoring data 190 is stored in a monitoring database 320.

An example for monitoring data 190 in JSON format is given below:

```
 {
 "requestMetadata": {
  "spanID": "123",
  "servicelD": "456",
  "traceID": "789",
  "transactionID": "101112",
  "customerlD": "131415",
  "UUID": "abcdef-12345-67890-ghijk"
 },
 "requestTiming": {
  "requestStartTime": "2025-03-07T10:00:00Z",
  "requestEndTime": "2025-03-07T10:00:05Z",
  "totalRequestDuration": 5000
 },
 "requestDetails": {
  "httpMethod": "POST",
  "endpoint": "/api/query",
  "queryStatement": "--spanlD=123, servicelD=456, tracelD=789\nSELECT SYSDATE
  FROM DUAL;"
 },
 "userContext": {
  "userID": "98765",
  "sessionID": "abc123xyz",
  "ipAddress": "192.168.1.1"
 }
 }
```

The above monitoring data is exemplary only and further sections, e.g. for performanceMetrics and errorHandling etc., can be included.

The database service 210 receives the request 170, executes the query and sends back the query result 180 to the frontend service 120. As metadata 150 was added to the query 130 as a comment, the query result 180 is unchanged by the metadata added to the query. Thus, the query result 180 will provide the system date in the column 'SYSDATE' and will not contain metadata:

In addition to executing the query, the database service 210 generates diagnostic data for query execution. Diagnostic data comprises metrics data documenting the execution of the query on the database as well as the query statement including metadata. Diagnostic data is stored in a diagnostic database 220. The diagnostic database 220 can be included in the main database 210 or being kept separately, see FIG. 1. For this disclosure, the difference is irrelevant.

The monitoring system features a database monitoring module 330 allowing the monitoring system to collect diagnostic data from the diagnostic database 220. The database monitoring module 330 requests diagnostic data from the diagnostic database 220 in step 260, and in step 270 the diagnostic database 220 sends diagnostic data to the database monitoring module 330.

Depending on the database and the system configuration, an application logic 310 in the monitoring system controls the database monitoring module 330. The database monitoring module either requests diagnostic data for a specific query by specifying metadata for such query in the request 260 sent to the diagnostic database or diagnostic data is continuously polled from the diagnostic database 220. In either case, diagnostic data including metadata 270, 340 is received by the database monitoring module 330 and is stored in the monitoring database 320.

For Oracle databases, the following diagnostic data is provided via the V$SQL_MONITOR view:
SQL_ID: The unique identifier for the SQL statement.
SQL_EXEC_START: The start time of the SQL execution.
SQL_EXEC_ID: The execution ID for the SQL statement.
SQL_TEXT: The query statement
SESSION_ID: The session ID of the user executing the SQL statement.
SESSION_SERIAL#: The serial number of the session.
STATUS: The current status of the SQL statement (e.g., EXECUTING, DONE).
ELAPSED_TIME: The total elapsed time for the SQL execution.
CPU_TIME: The total CPU time used by the SQL execution.
BUFFER_GETS: The number of buffer gets (logical reads) during the SQL execution.
DISK_READS: The number of disk reads performed during the SQL execution.
DIRECT_WRITES: The number of direct writes performed during the SQL execution.
APPLICATION_WAIT_TIME: The total time spent waiting for application-related events.
CONCURRENCY_WAIT_TIME: The total time spent waiting for concurrency-related events.
CLUSTER_WAIT_TIME: The total time spent waiting for cluster-related events.
USER_IO_WAIT_TIME: The total time spent waiting for user I/O operations.
PLSQL_EXEC_TIME: The total time spent executing PL/SQL code.
JAVA_EXEC_TIME: The total time spent executing Java code.
FETCHES: The number of fetches performed during the SQL execution.
ROWS_PROCESSED: The number of rows processed by the SQL statement.
IO_INTERCONNECT_BYTES: The number of bytes transferred over the I/O interconnect.
PHYSICAL_READ_BYTES: The number of bytes read from disk.
PHYSICAL_WRITE_BYTES: The number of bytes written to disk.
OPTIMIZER_COST: The cost estimate provided by the optimizer for the SQL statement.
SQL_PLAN_HASH_VALUE: The hash value of the SQL execution plan.
Note that this list is non-limiting as it depends on the database itself.

According to a first variant, diagnostic data for a specific query is requested from the diagnostic database 220. For example, the diagnostic data SQL_EXEC_START, SQL_TEXT, SQL_EXEC_ID, ELAPSED_TIME, CPU_TIME, BUFFER_GETS, DISK_READS for the query identified by the metadata '--spanlD=123, servicelD=456, tracelD=789%' in the query statement SQL_TEXT can be requested from the diagnostic database 220 as follows:

```
 SELECT
  SQL_EXEC_START, SQL_TEXT, SQL_EXEC_ID, ELAPSED_TIME, CPU_TIME,
  BUFFER_GETS, DISK_READS
  FROM
  V$SQL_MONITOR
  WHERE
  SQL_TEXT LIKE '--spanID=123, servicelD=456, tracelD=789%';
```

Note that the percentage sign "%" is a wildcard, thus metrics data including the query statement plus metadata SQL_TEXT for a query statement starting with «--spanlD=123, servicelD=456, tracelD=789» will be returned and stored in the monitoring database 320. In case metadata is placed within the query, two wildcards are necessary, as in «SQL_TEXT LIKE '%spanlD=123, servicelD=456, tracelD=789%'».

According to preferred variant, all diagnostic data within a certain time range is requested from the diagnostic database 220. For example, the diagnostic data SQL_EXEC_START, SQL_TEXT, SQL_EXEC_ID, ELAPSED_TIME, CPU_TIME, BUFFER_GETS, DISK_READS for all queries executed in the previous 300 s are requested from the diagnostic database 220 as follows:

```
 SELECT
  SQL_ID, SQL_EXEC_START, SQL_TEXT, SQL_EXEC_ID, ELAPSED_TIME, CPU_TIME,
  BUFFER_GETS, DISK_READS
  FROM
  V$SQL_MONITOR
  WHERE
  SQL_EXEC_START >= (SYSDATE - NUMTODSINTERVAL(300, 'SECOND'));
```

In any case, the diagnostic data stored in the monitoring database 320 includes the query statement SQL_TEXT, such that the diagnostic data is identifiable by the metadata 150 added to the query statement 130.

Generally, diagnostic data may be requested via the database monitoring module 330 or by sending a conventional request 170 to the API of the database. In the latter case, metrics data sent in response to the query is extracted from the response and stored in the monitoring database 320.

Irrespective of the scope of diagnostic data, the monitoring database 320 contains at least (i) monitoring data 190 for the request sent to the database service 210 including metadata 150, and (ii) diagnostic data 270, 340 provided by the database server 200 comprising the same metadata.

Querying the monitoring database 320 for monitoring data and diagnostic data identified by the same metadata yields detailed information about the performance of an individual database query.

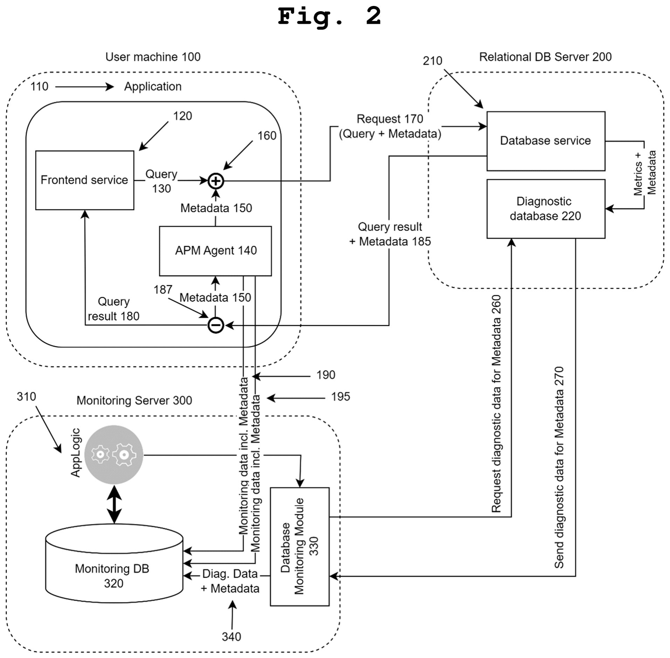

FIG. 2 shows an alternative embodiment for the monitoring of database queries in a second application example. In order to compare the first and second application examples, the above query 130 is used again:
SELECT SYSDATE FROM DUAL;
Contrary to the embodiment of FIG. 1, where metadata was added as a comment to the query, metadata 150 is added by modifying the query 130 to include metadata 150 in a separate column in the query result 185. Whereas in the first application example, metadata 150 was for example added to the query as a single-line comment:
Query with metadata added as single-line comment:
   --spanlD=123, servicelD=456, tracelD=789
   SELECT SYSDATE FROM DUAL;
   the query with metadata to be added as a separate column to the query result is:
Query with metadata to be added as a separate column:
   SELECT 'spanID=123, servicelD=456, tracelD=789' AS METADATA, SYSDATE FROM DUAL;

Doing this adds metadata 150 to the query 130 and asks the database to return the metadata as a separate column 'METADATA' in the query results.

Instead of adding metadata 150 verbatim to the query, metadata is preferably added to the query in a prepared statement. By doing so, execution plans of the DBMS can be leveraged more effectively and SQL code injection attacks are prevented too. The following Java code using PreparedStatement in JDBC shows this schematically:
Connection myCon = DriverManager.getConnection(path,username,password); Prepared Statement myStmt;
myStmt = myCon.prepareStatement("SELECT ? AS METADATA, SYSDATE FROM DUAL"); myStmt.setString(1,"spanlD=123, servicelD=456, tracelD=789");
ResultSet myRs= myStmt.executeQuery();

In a first step, the connection myCon to the database is established. Next, a variable for the prepared statement myStmt is defined and the actual query statement is defined including one or more placeholders "?". In the next step, these placeholders are replaced by integers, strings, floats etc. In our case, the placeholder in the prepared statement is replaced by a string comprising the actual spanlD, servicelD and tracelD. Finally, the database is queried yielding the ResultSet myRs by executing the prepared statement. Instead of passing all metadata in one string, identifiers can be passed to the query individually too, e.g.,
myStmt = myCon.prepareStatement("SELECT 'spanID=?, serviceID=?, traceID=?' AS METADATA, SYSDATE FROM DUAL");
myStmt.setInt(1,123);
myStmt.setInt(2,456);
myStmt.setInt(3,789);

Prepared statements are not limited to Java only as they are available in all major programming languages, e.g., Python: Uses parameterized queries with libraries like sqlite3, psycopg2 for PostgreSQL, and MySQLdb for MySQL; PHP: Supports prepared statements with PDO (PHP Data Objects) and MySQLi; C#: Uses SqlCommand with parameters in ADO.NET; and JavaS-cript (Node.js): Uses libraries like mysql and pg for PostgreSQL, which support prepared statements.

As in FIG. 1, the APM agent 140 generates monitoring data 190 including metadata 150 for the outgoing request 170 sent to the database 210. The monitoring data 190 is stored in the monitoring database 320.

In FIG. 1 the database service 210 returned the query result 180 for the original query 130 directly, i.e. unmodified, to the frontend service 120. However, according to the second application example, the database 210 sends metadata in a first column and the result for the original query, i.e. without metadata, in another column, see 185. The query result including the metadata 185 will provide the metadata in column 'METADATA' and the system date in column 'SYSDATE':

| METADATA | SYSDATE |
|---|---|
| spanlD=123, servicelD=456, tracelD=789 07-MAR-25 | |

The first column containing metadata 150 is removed from the query result containing metadata 185 by the APM agent 140 in block 187 such that the frontend service 120 receives just the query result 180 for the original query 130 as in the first application example. In addition, the APM agent 140 generates monitoring data 195 for the incoming request 185 containing the query result 180 and metadata 150. Also the monitoring data 195 is stored in the monitoring database 320.

As in the first application example, the database monitoring module 330 requests 260 diagnostic data for the query execution from the diagnostic database 220, and the diagnostic database sends 270 diagnostic data to the database monitoring module 330. Also the diagnostic data including metadata 340 is stored in the monitoring database 320.

Hence, in the embodiment shown in FIG. 2, (i) monitoring data and metadata 190 for the outgoing request sent to the database service 210 is stored in the monitoring database 320, (ii) monitoring data and metadata 195 for the incoming request (i.e. the response to the request) from the database service 210 is stored in the monitoring database 320, and (iii) diagnostic data 270 including metadata 340 is stored in the monitoring database 320.

Querying the monitoring database 320 for monitoring data and diagnostic data identified by the same metadata yields detailed information about the performance of an individual database query.

Generally, the diagnostic database does not provide diagnostic data in real-time. Typically, diagnostic data is provided with some delay, e.g., 5 minutes, after query execution. However, as metadata 150 uniquely identifying the query was added to the query 130, diagnostic data for unique query executions can nevertheless be obtained.

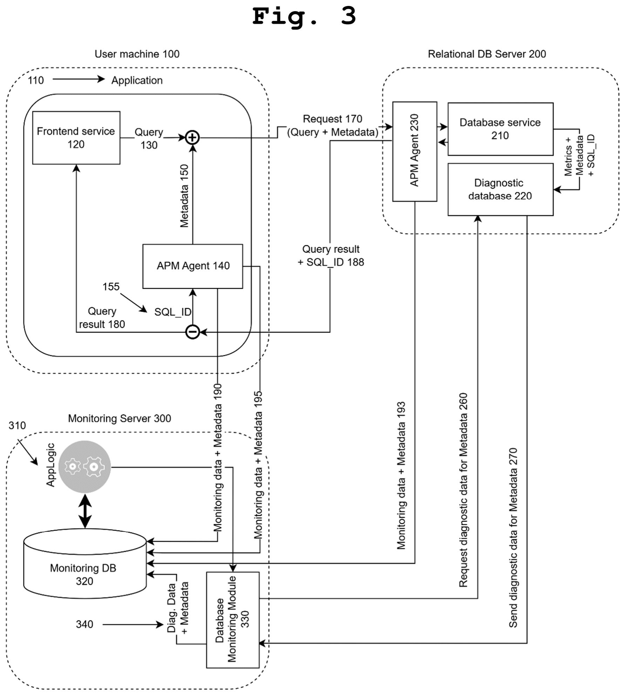

FIG. 3 shows a third application example for database monitoring. It is assumed that the database 200 is an Oracle database having a version greater or equal to 18c, where the database can be requested to generate a so-called SQL_ID, i.e., an identifier for the query. There are different methods to ask the database to return the SQL_ID for the query, e.g., by running the command:
SET FEEDBACK ON SQL_ID;
Note that the SQL_ID is based on the query statement only, i.e., identical query statements sent from different applications are identified by the same SQL_ID.

As in the previous examples, it is assumed that the user enters a query statement 130 in a frontend service 120 of an application 110:
SELECT SYSDATE FROM DUAL;
Before a request, e.g. an HTTP request, containing the query 130 is leaving the application 110, an APM agent 140 intercepts the request and adds metadata 150 to the request. As in the previous examples, the metadata 150 comprises a spanlD, a servicelD and a tracelD.

The query with added metadata, e.g. added as a single-line comment looks like:
Query with metadata added as a single-line comment:
--spanlD=123, servicelD=456, tracelD=789
SELECT SYSDATE FROM DUAL;

A request 170 comprising the query 130 including metadata 150 is sent to the database server 200. In addition, monitoring data 190 comprising metadata 150 for the outgoing request 170 is sent to a monitoring system, where it is stored in the monitoring database 320.

Contrary to the former application examples, the database application 210 running on the database server 200 also features an APM agent 230 which receives the incoming request 170 carrying the query and the metadata. The APM agent 230 generates monitoring data 193 for the incoming request 170 and sends it to the monitoring database 320. As monitoring data 190 for the outgoing request 170 and monitoring data 193 for the incoming request share the same tracelD, the monitoring system is able to link the monitoring data into one trace traversing different applications or instances.

The request 170 is received by the database service 210 executing the query. Since the database was requested to produce an SQL_ID for the query, the query result including the SQL_ID 188 is returned to the application 110, where the APM agent 140 intercepts the incoming request. In this example, it is assumed that SQL_ID = 'XYZ'. The APM agent 140 removes the SQL_ID 155 from the request 188, generates monitoring data 195 for the incoming request 188 and sends the monitoring data 195 to the monitoring database 320, where it is stored. The query result 180 without SQL_ID is forwarded to the frontend service 120.

After executing the query, the database generates diagnostic data which is identified by the metadata and the SQL_ID. Diagnostic data is stored in a diagnostic database 220. The diagnostic data is either continuously polled by a database monitoring module 330 in the monitoring system or, as displayed, diagnostic data for the query identified by the metadata is specifically requested.

The V$SQL_MONITOR view can be used to get diagnostic data for the execution of the query identified by the metadata and SQL_ID. E.g., querying the V$SQL_MONITOR view for diagnostic data is done as follows:

```
 SELECT
    SQL_EXEC_START, SQL_EXEC_ID, ELAPSED_TIME, CPU_TIME, BUFFER_GETS,
    DISK_READS
    FROM
   V$SQL_MONITOR
   WHERE
   SQL_ID = 'XYZ' AND SQL_TEXT LIKE '--spanlD=123, servicelD=456, tracelD=789%';
   
```

yields:
1. SQL_EXEC_START: This is the timestamp indicating when the execution of the SQL statement started. It helps in identifying the exact start time of the monitored SQL execution.
2. SQL_EXEC_ID: This is a unique identifier for each execution of a SQL statement. It distinguishes different executions of the same SQL statement, especially useful when the same SQL is executed multiple times.
3. ELAPSED_TIME: This metric represents the total time taken for the execution of the SQL statement, measured in microseconds. It includes all the time spent on CPU processing, I/O operations, and waiting for resources.
4. CPU_TIME: This is the amount of time the CPU spent processing the SQL statement, also measured in microseconds. It helps in understanding how much CPU resource was consumed by the SQL execution.
5. BUFFER_GETS: This metric indicates the number of logical reads (buffer gets) performed during the execution of the SQL statement. Logical reads are the number of times data blocks are read from the buffer cache.
6. DISK_READS: This represents the number of physical reads from disk performed during the execution of the SQL statement. Physical reads occur when data blocks are not found in the buffer cache and need to be read from disk
7. Note that specifying the SQL_ID in the query for diagnostic data is superfluous since the metadata 150 is unique for the query 130. The SQL_ID 'XYZ' can, however, be used to query other metrics using the DBMS_XPLAN.DISPLAY_CURSOR function, e.g.:
   SELECT * FROM TABLE(DBMS_XPLAN.DISPLAY_CURSOR('XYZ', NULL, 'ALLSTATS LAST'));
Here are some key metrics you can get:
Execution Plan: The step-by-step breakdown of how the SQL statement is executed, including the order of operations and the methods used (e.g., full table scans, index scans).
Elapsed Time: The total time taken to execute each step in the execution plan.
CPU Time: The amount of CPU time consumed by each operation in the execution plan.
Buffer Gets: The number of logical reads (buffer gets) performed by each operation.
Disk Reads: The number of physical reads from disk performed by each operation.
Rows Processed: The number of rows processed by each operation.
Cost: The estimated cost of each operation, which helps in understanding the optimizer's decision-making process.
Cardinality: The estimated number of rows that will be processed by each operation.
I/O Statistics: Detailed input/output statistics, including the number of blocks read and written. Parallel Execution Details: Information about parallel execution, if applicable, including the number of parallel servers used and their activity.

Irrespective whether diagnostic data is continuously polled 260 from the diagnostic database 220 or requested for specific queries, diagnostic data 270, 340 is sent to the database monitoring module 330 and stored in the monitoring database 320.

Analogous to the previous application examples, querying the monitoring database 320 for monitoring data and diagnostic data identified by the same metadata yields detailed information about the performance of individual database queries.

Note: Of course it would have been possible to not add any metadata 150 to the query 130 and to use the SQL_ID only to identify the diagnostic data for the query. However, this involves the risk that if multiple users/services send the same query to the database, diagnostic data for these queries can no longer be differentiated. Thus, it is greatly beneficial to add further metadata to the query. Doing so, makes each query and associated diagnostic data uniquely identifiable in the monitoring database.

Monitoring the execution of database queries is not limited to Oracle databases either. If a database can be requested to provide diagnostic data on query level, it is possible to monitor the execution of database queries. A fourth application example demonstrates the monitoring of database queries on a Microsoft SQL 2022 database. As monitoring is done essentially as in the first application example, FIG. 1 is used again.

It is assumed that the database comprises two tables, namely Persons and Money, containing the following data:

**Tab. 1 Tables Persons and Money**

| **Table Persons** | | | | | **Table Money** | |
|---|---|---|---|---|---|---|
| **PersonID** | **LastName** | **FirstName** | **Address** | **City** | **PersonID** | **Money** |
| | | | Sezam Street | Big Apple | 1 | 10 |
| 1 | Smith | John | | | 1 | 5 |
| | | | Sezam Street | Big Apple | 2 | 7 |
| 2 | Smith | Dorothy | | | 3 | 11 |
| 3 | Doe | Mark | 1st Avenue | Orlando | | |

In a first step, the user enters a query statement, short query, 130 in a frontend service 120 of an application 110:
SELECT TOP(100)
   persons.personid,
   lastname,
   firstname,
   SUM(money) as money
FROM
   persons
   LEFT JOIN money ON persons.personid = money.personid
GROUP BY
   persons.personid,
   lastname,
   firstname;

The application 110 runs on a user's machine 100. The query 130 requests the Microsoft SQL 2022 database service 210 to return a list of persons and their accumulated money to the application 110.

Next, metadata 150 is added to the query 130 and a request 170 comprising the query and the added metadata is sent to the database. E.g., the request carrying the query 130 is intercepted by an APM agent 140 and the APM agent adds metadata to the query (also known as enriching the query), see block 160. In this example, it is assumed that an entitylD, called dt_pure_path_id, and a sessionlD, called dt_session_id, are added as metadata to the query 130.

Metadata is added as a comment to the query, where the comment is placed within the query itself. The query 130 with metadata looks like:
SELECT TOP(100)
   persons.personid,
   lastname,
   firstname,
   SUM(money) as money
   /* dt_pure_path_id = 110011 dt_session_id = 220022 */
FROM
   persons
   LEFT JOIN money ON persons.personid = money.personid
GROUP BY
   persons.personid,
   lastname,
   firstname;
Note that the metadata contains exemplary values only.

After adding the metadata 150 to the query 130, the request 170 carrying the query and the metadata is sent to the database service 210, e.g., in our case at backend.example.com, running on the database server 200. In addition, the APM agent 140 generates monitoring data 190 for the request 170 carrying the query and the metadata and sends the monitoring data to the monitoring server 300, where it is stored in a monitoring database 320.

The database service 210 receives the request 170, executes the query and sends back the query result 180 to the frontend service 120. As metadata 150 was added to the query 130 as a comment, the query result 180 is not changed by the metadata. The query result 180 is as follows:

**Tab. 2 Query result**

| **Per-sonID** | **LastName** | **FirstName** | **Money** |
|---|---|---|---|
| 1 | Smith | John | 15 |
| 2 | Smith | Dorothy | 7 |
| 3 | Doe | Mark | 11 |

In addition to executing the query, the database service 210 generates diagnostic data for the executed query. Diagnostic data comprises metrics data documenting the execution of the query on the database as well as the query statement including metadata. Diagnostic data is stored in a diagnostic database 220. The diagnostic database 220 can be included in the main database 210 or being kept separately, see FIG. 1. For this disclosure, the difference is irrelevant.

The monitoring system features a database monitoring module 330 allowing the monitoring system to collect diagnostic data from the diagnostic database 220. Diagnostic data is requested from the diagnostic database 220 in step 260, and in step 270 the diagnostic database 220 sends diagnostic data to the database monitoring module 330. In the present example, diagnostic data comprising the query_id, the plan_id, the query_sql_text, the total_duration, the average_duration, the average_cpu_time, and the execution count, is requested from the diagnostic database 220 that was generated during the most recent runtime statistics interval. In Microsoft SQL Server, the duration of a runtime statistics interval can vary based on the configuration of the Query Store. By default, the Query Store collects runtime statistics at regular intervals, which can range from minutes to hours. In either case, diagnostic data including metadata 270, 340 is received by the database monitoring module 330 and is stored in the monitoring database 320.

An exemplary query for querying diagnostic data is given below:
SELECT TOP (100)
   queries.query_id AS query_id,
   stats.plan_id AS plan_id,
   texts.query_sql_text AS query_sql_text,
   SUM(stats.avg_duration * stats.count_executions) * 0.001 AS total_duration,
   SUM(stats.avg_duration) * 0.001 AS avg_duration,
   SUM(stats.avg_cpu_time) * 0.001 AS avg_cpu_time,
   SUM(stats.count_executions) AS count_executions
FROM
   (SELECT TOP (1) runtime_stats_interval_id FROM sys.query_store_runtime_stats_interval WITH (NOLOCK) WHERE end_time AT TIME ZONE 'UTC' <= GETUTCDATE() ORDER BY start_time DESC) intervals
   JOIN sys.query_store_runtime_stats stats WITH (NOLOCK)
      ON stats.runtime_stats_interval_id = intervals.runtime_stats_interval_id
   JOIN sys.query_store_plan plans WITH (NOLOCK)
      ON stats.plan_id = plans.plan_id
   JOIN sys.query_store_query queries WITH (NOLOCK)
      ON plans.query_id = queries.query_id
   JOIN sys.query_store_query_text texts WITH (NOLOCK)
      ON queries.query_text_id = texts.query_text_id
   GROUP BY
      queries.query_id,
      queries.object_id,
      stats.plan_id,
      stats.execution_type_desc,
      texts.query_sql_text
   ORDER BY total_duration DESC;

This diagnostic query retrieves the top 100 queries from the Query Store in Microsoft SQL Server, ordered by their total execution duration. It provides detailed statistics for each query, including total duration, average duration, average CPU time, execution count and the query text.

Querying the diagnostic database yields:

**Tab. 3 Diagnostic data**

| **query_id** | **plan_id** | **total_duration** | **avg_duration** | **avg_cpu_time** | **count_executions** |
|---|---|---|---|---|---|
| 31 | 7 | 23.611 | 7.87033 | 0.878 | 3 |
| | | | | | |
| ... **query_sql_text** | | | | | |
| ... select top(100) persons.personid, lastname, firstname, sum(money) as money /* dt_pure_path_id = 110011 dt_session_id = 220022 */ from persons LEFT JOIN money ON persons.personid=money.personid GROUP BY persons.personid, lastname, firstname | | | | | |

The diagnostic data stored in the monitoring database 320 includes the query statement query_sql_text such that the diagnostic data is identifiable by the metadata 150 added to the query statement 130.

Irrespective of the scope of diagnostic data, the monitoring database 320 contains at least (i) monitoring data 190 for the request sent to the database service 210 including metadata 150, and (ii) diagnostic data 270, 340 provided by the database server 200 comprising the same metadata.

Querying the monitoring database 320 for monitoring data and diagnostic data identified by the same metadata yields detailed information about the performance of an individual database query.

Generally, it is noted that some databases do not produce diagnostic data by default and do so only after a respective setting is enabled. Many modern databases, on the other hand, produce such diagnostic data by default.

In addition, it is noted that the location of the database and its environment are irrelevant. E.g., it is possible that the database is located on the user's machine 100, on another computer in the same network, on another computer connected by the internet or as a database service in the cloud. Likewise, the database can run as an application on the operating system, on a virtual machine or in a container, such as Kubernetes or Docker.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A computer-implemented method for monitoring database queries in a distributed computing environment, comprising:
- receiving, by an agent, a database statement, where the agent is instrumented in an application and the application is executing a computer transaction within the computing environment;
- modifying, by the agent, the database statement by adding metadata to the database statement;
- sending, by the agent, the modified database statement to a database system;
- sending, by the agent, monitoring data for the application to a monitor server, where the monitoring data includes the metadata, and the monitor server is located remotely across a network from the application;
- retrieving, by the monitor server, diagnostic data from the database system, where the diagnostic data is generated in response to execution of the database statement; and
- correlating, by the monitor server, the diagnostic data with the monitoring data using the metadata.

2. The computer-implemented method of claim 1, wherein the database statement is further defined as a query and the metadata is defined as an identifier for the query.

3. The computer-implemented method of claim 2, wherein the identifier for the query is selected from a group consisting of an identifier assigned to the computer transaction, an identifier for a particular operation executed as part of the computer transaction, an identifier that links multiple operations executed as part of the computer transaction, an identifier for a particular service, an identifier for a particular application, an identifier assigned to a system user, and a Universal Unique Identifier.

4. The computer-implemented method of claim 2 or 3, further comprising:
- intercepting, by a database agent, the modified query, where the database agent resides on a server hosting the database system;
- intercepting, by the database agent, a database response to the query; and
- sending additional monitoring data for the execution of the modified query to the monitor server, where the additional monitoring data includes the query, the metadata and at least a portion of the database response.

5. The computer-implemented method of any one of the preceding claims, wherein the metadata is added as a comment within the database statement.

6. The computer-implemented method of any one of the preceding claims, wherein modifying the database statement comprises defining a prepared statement having at least one placeholder, and binding the metadata to the at least one placeholder to generate the modified database statement.

7. The computer-implemented method of any one of the preceding claims, wherein modifying the database statement further comprises requesting the database system to include the metadata in query results.

8. The computer-implemented method of claim 7, further comprising requesting the database system to include the metadata as a column in the query results.

9. The computer-implemented method of claim 7 or 8, further comprising:
- intercepting, by the agent, the query results sent by the database system;
- removing, by the agent, the metadata from the query results; and
- forwarding, by the agent, the query results without the metadata to the application.

10. The computer-implemented method of any one of the preceding claims further comprises intercepting, by the agent, a database response to the database statement and, in response to receiving the database response, sending monitoring data for the application to the monitor server, where the database response is generated in response to execution of the database statement and the monitoring data includes the database response.

11. The computer-implemented method of any one of the preceding claims further comprises generating, by the database system, the diagnostic data in response to execution of the database statement by the database system, and storing the diagnostic data in a diagnostic database associated with the database system.

12. The computer-implemented method of claim 11, wherein retrieving the diagnostic data from the diagnostic database comprises formulating a diagnostic query that includes the metadata and at least one wildcard character to pattern-match the metadata within a larger data string stored in the diagnostic database.

13. The computer-implemented method of any one of the preceding claims, wherein the diagnostic data includes one or more of elapsed time to execute database statement, CPU time consumed by the database statement, number of logical reads resulting from execution of the database statement, number of physical reads from disk resulting from execution of the database statement, and number of rows processed by execution of the database statement.

14. The computer-implemented method of any one of the preceding claims, further comprising:
- requesting, by the agent, the database system to generate a native query identifier for the database statement;
- receiving, by the agent, the native query identifier from the database system; and
- including, by the agent, the native query identifier in the monitoring data sent to the monitor server.

15. A computer-implemented system for monitoring database queries in a distributed computing environment, comprising:
- an application agent implemented by computer executable instructions and instrumented in an application residing on a host computing device, where the application is executing a computer transaction within the computing environment, and wherein the application agent is configured to receive a query for a database system from the application and modify the query by adding metadata to the query, where the metadata includes an identifier for the query; and
- a monitor server located remotely across a network from the host computing device;
- wherein the application agent is further configured to send the modified query to the database system and send monitoring data for the application to a monitor server, where the monitoring data includes the metadata; and
- wherein the monitor server is configured to retrieve diagnostic data from the database system and correlate the diagnostic data with the monitoring data using the metadata, where the diagnostic data is generated in response to execution of the query by the database system.
